# EUROPEAN PATENT APPLICATION

(11) **EP 1 541 534 A1**
(43) Date of publication of application: **15.06.2005**
(21) Application number: 02755903.8
(22) Date of filing: 09.08.2002
(51) Int. Cl.: C03B 33/03, B28D 5/00, B24B 9/10

(54) **GLASS PANE PROCESSING DEVICE**

(71) Applicant: Bando Kiko Co., Ltd, Tokushima-shi, Tokushima 770-0871 (JP)
(72) Inventor: BANDO, Kazuaki BANDO KIKO CO., LTD., Tokushima-shi, Tokushima 770-0871 (JP)
(74) Representative: BOVARD SA
(86) International application number: PCT/JP2002/008173
(87) International publication number: WO 2004/014810

(57) **Abstract**

A glass-plate working apparatus (1) includes a cut-line forming head (4) for forming a cut line (3) on a glass plate (2); a bend-breaking means (5) for bend-breaking along the cut line (3) the glass plate (2) with the cut line (3) formed thereon; a grinding head (7) for grinding a peripheral edge (6) of the bend-broken glass plate (2); a mirror polishing head (8) for mirror polishing the peripheral edge (6) of the ground glass plate (2) so that the peripheral edge (6) assumes the state of a mirror surface; a cut-line-forming supporting table (9) for supporting the glass plate (2) on which the cut line (3) is to be formed; a bend-breaking supporting table (10) for supporting the glass plate (2) to be bend-broken; a grinding supporting table (11) for supporting the glass plate (2) whose peripheral edge (6) is to be ground; a mirror-polishing supporting table (12) for supporting the glass plate (2) whose peripheral edge (6) is to be mirror polished; a moving means (13) for moving the cut-line forming head (4), the grinding head (7), and the mirror polishing head (8); and a transporting means (15) for transporting the glass plate (2).

## Description

### TECHNICAL FIELD

The present invention relates to an apparatus for working a glass plate which is used as automobile window glass or the like.

### BACKGROUND ART

A glass-plate working apparatus for manufacturing a glass plate having a desired shape is generally adapted to form a cut line on a glass plate, bend-break along the cut line the glass plate with the cut line formed thereon, and grind a peripheral edge of the bend-broken glass plate. The peripheral edge of the glass plate manufactured by such a glass-plate working apparatus is normally in the form of obscure glass or ground glass.

With respect to automobile window glass or the like, there are cases where peripheral edges of the glass plate are required to be subjected to processing into the state of a mirror surface (so-called polishing) for improvement in quality. However, the above-described glass-plate working apparatus is not suitable for the production of the glass plate whose peripheral edge has been mirror processed, and is therefore difficult to produce in a short time the glass plate whose peripheral edge has been mirror processed.

The present invention has been devised in view of the above-described aspects, and its object is to provide a glass-plate working apparatus capable of producing in a short time a glass plate whose peripheral edge has been mirror processed.

### DISCLOSURE OF THE INVENTION

The glass-plate working apparatus in accordance with a first aspect of the invention comprises: a cut-line forming head for forming a cut line on a glass plate; bend-breaking means for bend-breaking along the cut line the glass plate with the cut line formed thereon by the cut-line forming head; a grinding head for grinding a peripheral edge of the glass plate bend-broken by the bend-breaking means; a mirror polishing head for mirror polishing the peripheral edge of the glass plate ground by the grinding head so that the peripheral edge assumes a state of a mirror surface; a cut-line-forming supporting table for supporting the glass plate on which the cut line is to be formed by the cut-line forming head; a bend-breaking supporting table for supporting the glass plate to be bend-broken by the bend-breaking means; a grinding supporting table for supporting the glass plate whose peripheral edge is to be ground by the grinding head; a mirror-polishing supporting table for supporting the glass plate whose peripheral edge is to be mirror polished by the mirror polishing head; moving means for moving the mirror polishing head, the cut-line forming head, and the grinding head relative to the glass plate; and transporting means for transporting the glass plate onto the cut-line-forming supporting table, the bend-breaking supporting table, the grinding supporting table, and the mirror-polishing supporting table.

According to the glass-plate working apparatus in accordance with the first aspect of the invention, it is possible to provide a glass-plate working apparatus capable of producing in a short time a glass plate whose peripheral edge has been mirror processed.

In the glass-plate working apparatus in accordance with a second aspect of the invention, in the glass-plate working apparatus according to the first aspect of the invention, the moving means is adapted to move the mirror polishing head and at least one head of the cut-line forming head and the grinding head, respectively, relative to respective glass plates in one direction and another direction cross to the one direction in synchronism with each other.

According to the glass-plate working apparatus in accordance with the second aspect of the invention, the mirror polishing head and at least one head of the cut-line forming head and the grinding head can be moved at high speed and accurately relative to the respective glass plates. Hence, it is possible to enhance the working accuracy of the glass plates and shorten the working time.

In the glass-plate working apparatus in accordance with a third aspect of the invention, in the glass-plate working apparatus according to the second aspect of the invention, the moving means includes a movable base on which the mirror polishing head and the at least one of the cut-line forming head and the grinding head are mounted, the moving means being so adapted that as the movable base is moved in the one direction, the mirror polishing head and the at least one of the cut-line forming head and the grinding head are respectively moved in the one direction in mechanical synchronism with each other.

According to the glass-plate working apparatus in accordance with the third aspect of the invention, the mirror polishing head and the at least one of the cut-line forming head and the grinding head can be moved at high speed and accurately relative to the respective glass plates, and the maintenance and adjustment of the glass-plate working apparatus itself can be performed in a short time. Hence, it is possible to improve the operational efficiency in the working of the glass plates.

In the glass-plate working apparatus in accordance with a fourth aspect of the invention, in the glass-plate working apparatus according to the second or third aspect of the invention, the moving means includes a line shaft coupled to the mirror-polishing supporting table and at least one supporting table of the cut-line-forming supporting table and the grinding supporting table by means of a threaded shaft threadedly engaged with the respective supporting tables and extending in the other direction, the moving means being arranged such that as the line shaft is rotated, the mirror polishing head and the at least one head of the cut-line forming head and the grinding head are respectively moved in the other direction in mechanical synchronism with each other relative to the glass plates respectively supported on the mirror-polishing supporting table and the at least one supporting table of the cut-line-forming supporting table and the grinding supporting table.

According to the glass-plate working apparatus in accordance with the fourth aspect of the invention, the mirror polishing head and the at least one of the cut-line forming head and the grinding head can be moved at high speed and accurately relative to the respective glass plates, and the maintenance and adjustment of the glass-plate working apparatus itself can be performed in a short time. Hence, it is possible to improve the operational efficiency in the working of the glass plates.

In the glass-plate working apparatus in accordance with a fifth aspect of the invention, in the glass-plate working apparatus according to any one of the first to fourth aspects of the invention, the mirror polishing head includes a mirror polishing wheel; rotating means for rotating the mirror polishing wheel; and resiliently supporting means for supporting the mirror polishing wheel resiliently and movably in a direction perpendicular to a tangential direction of the peripheral edge of the glass plate at a mirror polishing point where the mirror polishing wheel comes into contact with said peripheral edge to mirror polish the peripheral edge of the glass plate, so as to impart a resiliently pressing force to the peripheral edge of the glass plate by the mirror polishing wheel.

According to the glass-plate working apparatus in accordance with the fifth aspect of the invention, the mirror polishing wheel can be brought into contact with the peripheral edge of the glass plate with a desired pressing force. Hence, it is possible to effect the mirror polishing of the peripheral edge of the glass plate accurately.

In the glass-plate working apparatus in accordance with a sixth aspect of the invention, in the glass-plate working apparatus according to the fifth aspect of the invention, the resiliently supporting means is adapted to support the mirror polishing wheel resiliently and movably onto the peripheral edge of the glass plate in the direction perpendicular to the tangential direction of the peripheral edge of the glass plate, such that the mirror polishing wheel comes into contact with that portion of the peripheral edge of the glass plate which requires mirror polishing, while the resiliently supporting means is adapted to retract the mirror polishing wheel away from the peripheral edge of the glass plate in the direction perpendicular to the tangential direction of the peripheral edge of the glass plate, such that the mirror polishing wheel does not come into contact with that portion of the peripheral edge of the glass plate which does not require mirror polishing.

According to the glass-plate working apparatus in accordance with the sixth aspect of the invention, it is possible to produce the glass plate for which mirror polishing is provided at a desired portion while maintaining the production efficiency of the glass plates.

In the glass-plate working apparatus in accordance with a seventh aspect of the invention, in the glass-plate working apparatus according to the fifth or sixth aspect of the invention, the resiliently supporting means has a pneumatic cylinder unit for supporting the mirror polishing wheel resiliently and movably in the direction perpendicular to the tangential direction.

In the glass-plate working apparatus in accordance with an eighth aspect of the invention, the glass-plate working apparatus according to any one of the first to seventh aspects of the invention further comprises: swiveling means for swiveling the mirror polishing head and the at least one head of the cut-line forming head and the grinding head, respectively, in synchronism with each other.

In the glass-plate working apparatus in accordance with a ninth aspect of the invention, in the glass-plate working apparatus according to the eighth aspect of the invention, the swiveling means is adapted to swivel the cut-line forming head about an axis on which a cut-line forming point where a cut-line forming cutter wheel of the cut-line forming head comes into contact with the glass plate to form the cut line on the glass plate is located and which extends in a direction perpendicular to one surface of the glass plate, the swiveling means being adapted to swivel the grinding head about an axis which passes through a grinding point where a grinding wheel of the grinding head comes into contact with the peripheral edge of the glass plate to grind the peripheral edge and which extends in the direction perpendicular to the one surface of the glass plate, the swiveling means being adapted to swivel the mirror polishing head about an axis which passes through a mirror polishing point where a mirror polishing wheel of the mirror polishing head comes into contact with the peripheral edge of the glass plate to mirror polish the peripheral edge and which extends in the direction perpendicular to the one surface of the glass plate.

In the glass-plate working apparatus in accordance with a 10th aspect of the invention, in the glass-plate working apparatus according to the any one of the first to ninth aspects of the invention, the bend-breaking means includes a bend-breaking head for bend-breaking along the cut line the glass plate supported on the bend-breaking supporting table and a bend-breaking-head moving device for moving the bend-breaking head in the one direction and the other direction relative to the glass plate, and the bend-breaking head includes edge-cut-line forming means for forming an edge cut line on the glass plate with the cut line formed thereon by the cut-line forming head and push-breaking means for push-breaking along the cut line the glass plate with the edge cut line formed thereon by the edge-cut-line forming means.

According to the above-described glass-plate working apparatus of the invention, it is possible to provide a glass-plate working apparatus capable of producing in a short time a glass plate whose peripheral edge has been mirror processed.

### BRIEF DESCRIPTION OF THE DRAWINGS

Fig. 1 is an explanatory front elevational view of a right-hand section of an embodiment of a glass-plate working apparatus in accordance with the invention;
Fig. 2 is an explanatory front elevational view of a rleft-hand section of the embodiment of the glass-plate working apparatus in accordance with the invention;
Fig. 3 is an explanatory front cross-sectional view of the right-hand section shown in Fig. 1;
Fig. 4 is an explanatory front cross-sectional view of the left-hand section shown in Fig. 2;
Fig. 5 is an explanatory plan view of the right-hand section shown in Fig. 1;
Fig. 6 is an explanatory plan view of the left-hand section shown in Fig. 2;
Fig. 7 is an explanatory cross-sectional view, taken along line VII ― VII, of the right-hand section shown in Fig. 1;
Fig. 8 is an explanatory cross-sectional view, taken along line VIII - VIII, of the left-hand section shown in Fig. 2;
Fig. 9 is a detailed explanatory plan view of a bend-breaking means in the right-hand section shown in Fig. 1;
Fig. 10 is a detailed explanatory view of a cut-line forming head in the right-hand section shown in Fig. 1;
Fig. 11 is a detailed explanatory view of a bend-breaking head in the right-hand section shown in Fig. 1;
Fig. 12 is a detailed explanatory view of a grinding head in the left-hand section shown in Fig. 2;
Fig. 13 is a detailed explanatory view of a mirror polishing head in the left-hand section shown in Fig. 2; and
Fig. 14 is a detailed explanatory plan view of the mirror polishing head in the left-hand section shown in Fig. 2.

### EMBODIMENT

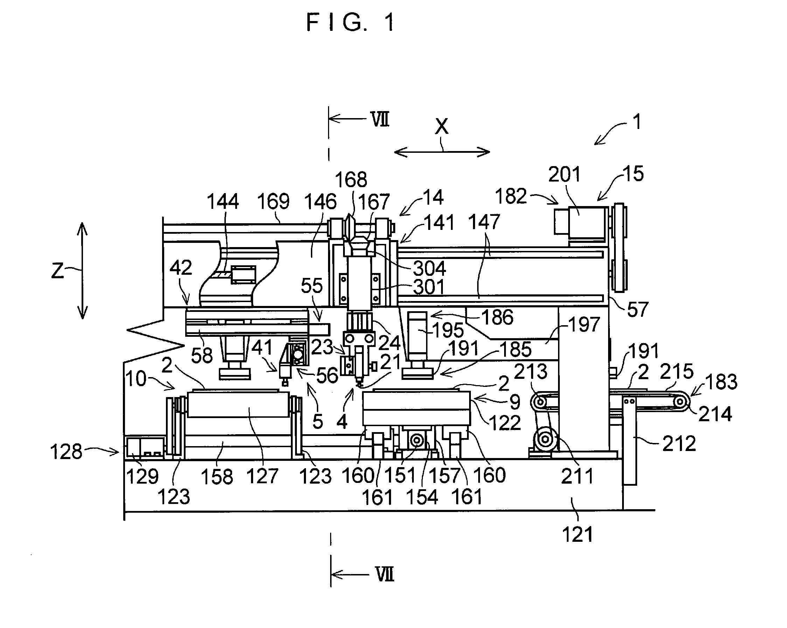

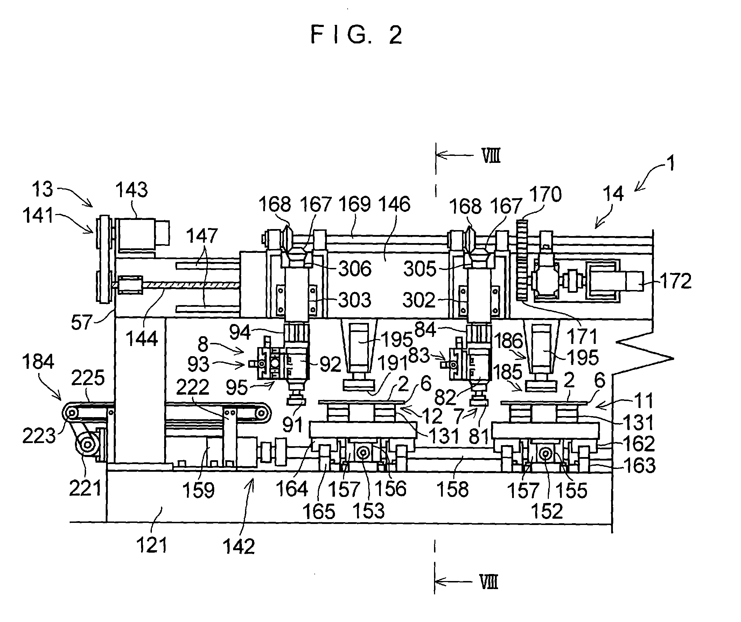

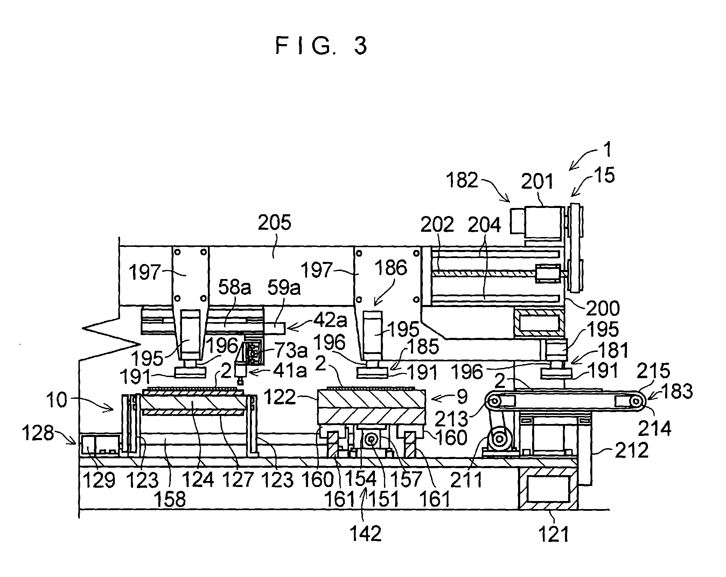

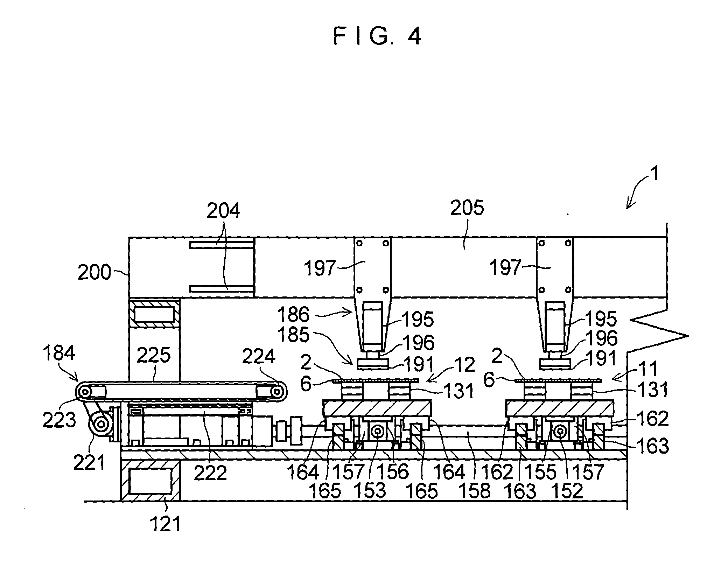

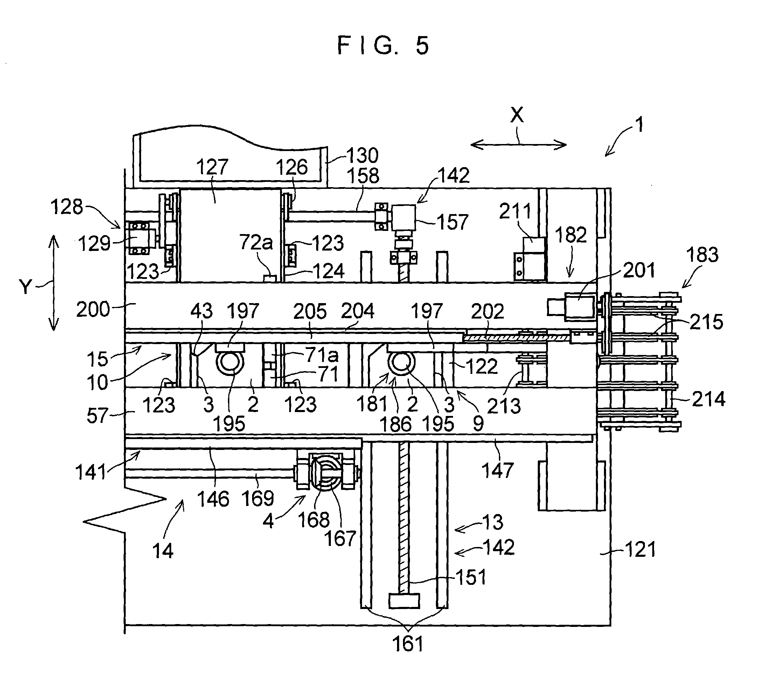

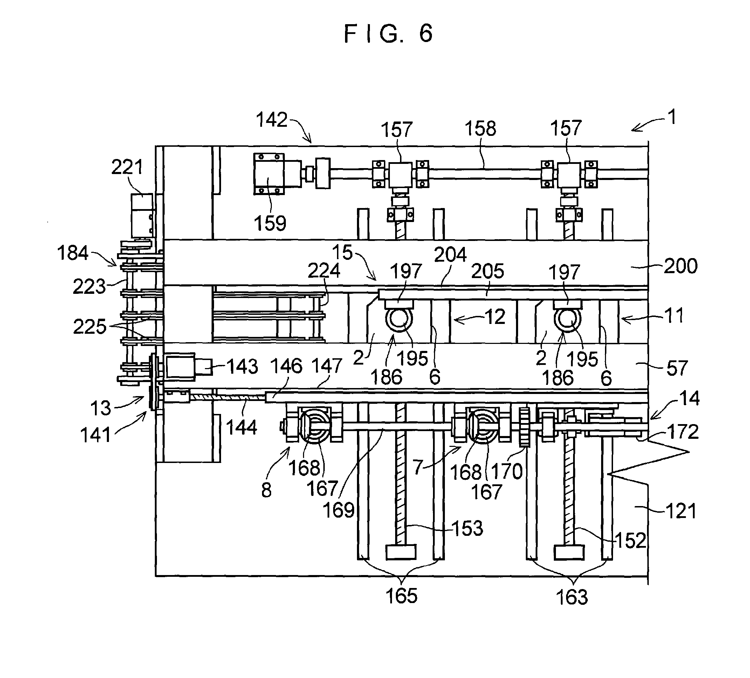

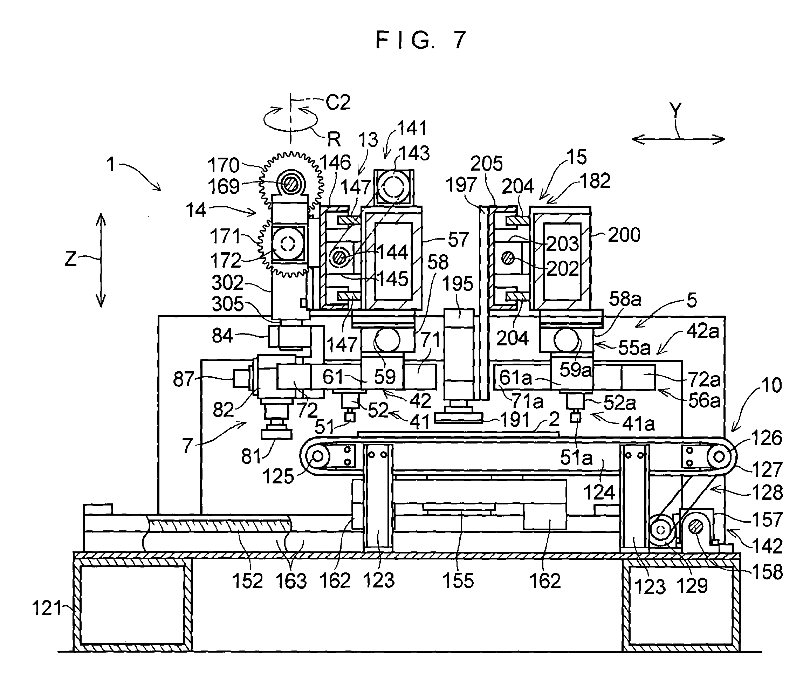

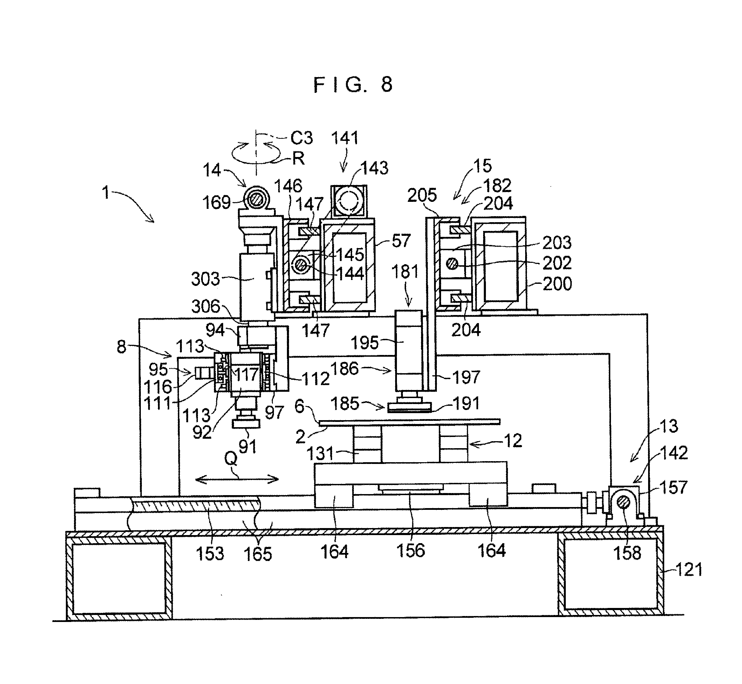

In Figs. 1 to 14, a glass-plate working apparatus 1 in accordance with this embodiment is comprised of a cut-line forming head 4 for forming a cut line 3 on a glass plate 2; a bend-breaking means 5 for bend-breaking along the cut line 3 the glass plate 2 with the cut line 3 formed thereon by the cut-line forming head 4; a grinding head 7 for grinding a peripheral edge 6 of the glass plate 2 bend-broken by the bend-breaking means 5; a mirror polishing head 8 for mirror polishing the peripheral edge 6 of the glass plate 2 ground by the grinding head 7 so that the peripheral edge 6 assumes the state of a mirror surface; a cut-line-forming supporting table 9 for supporting the glass plate 2 on which the cut line 3 is to be formed by the cut-line forming head 4; a bend-breaking supporting table 10 for supporting the glass plate 2 to be bend-broken by the bend-breaking means 5; a grinding supporting table 11 for supporting the glass plate 2 whose peripheral edge 6 is to be ground by the grinding head 7; a mirror-polishing supporting table 12 for supporting the glass plate 2 whose peripheral edge 6 is to be mirror polished by the mirror polishing head 8; a moving means 13 for moving the cut-line forming head 4, the grinding head 7, and the mirror polishing head 8, respectively, relative to the glass plate 2 in an X direction and a Y direction perpendicular to the X direction in synchronism with each other; a swiveling means 14 for swiveling the cut-line forming head 4, the grinding head 7, and the mirror polishing head 8, respectively, in an R direction in synchronism with each other; and a transporting means 15 for transporting the glass plate 2 onto the cut-line-forming supporting table 9, the bend-breaking supporting table 10, the grinding supporting table 11, and the mirror-polishing supporting table 12.

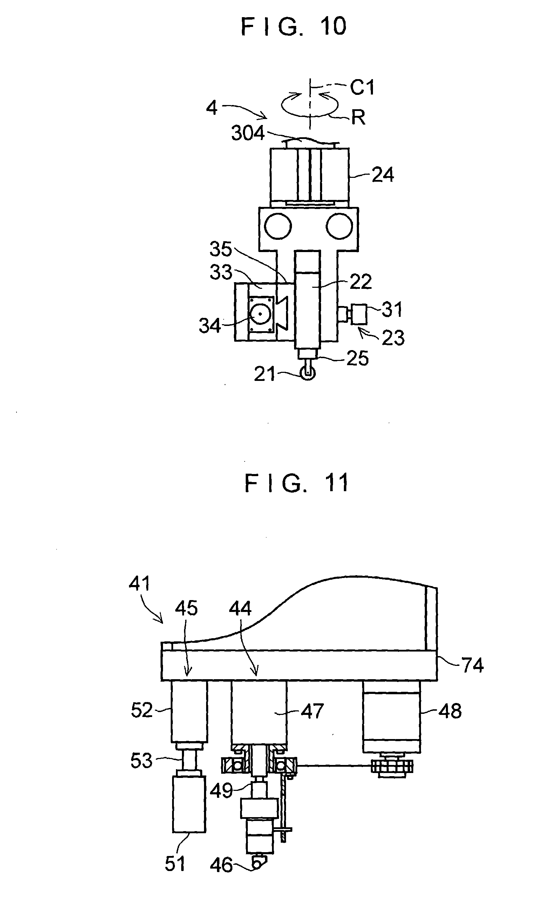

As particularly explained in detail in Fig. 10, the cut-line forming head 4 includes a cut-line forming cutter wheel 21; an air cylinder 22 for raising or lowering the cutter wheel 21; a fine adjustment mechanism 23 for finely adjusting the position of the cutter wheel 21; and a gripper 24 attached to a lower end of a shaft 304. The air cylinder 22 has a piston rod 25 which is reciprocatable in a Z direction perpendicular to the X direction and the Y direction. The cutter wheel 21 is rotatably mounted at an outer distal end of the piston rod 25.

The fine adjustment mechanism 23 includes a threaded shaft 31 attached rotatably to the gripper 24 in such a manner as to extend in the X direction; an X-direction slide 33 to which a nut threadedly engaged with the threaded shaft 31 is secured and which is fitted to the gripper 24 so as to be movable in the X direction; a threaded shaft 34 attached rotatably to the X-direction slide 33 in such a manner as to extend in the Y direction; and a Y-direction slide 35 to which a nut threadedly engaged with the threaded shaft 34 is secured and which is fitted to the X-direction slide 33 so as to be movable in the Y direction. The air cylinder 22 is fixed to the Y-direction slide 35. The fine adjustment mechanism 23 is adapted to adjust the movement of the X-direction slide 33 in the X direction relative to the gripper 24 by rotating the threaded shaft 31 by means of a knob, and adjust the movement of the Y-direction slide 35 in the Y direction relative to the X-direction slide 33 by rotating the threaded shaft 34 by means of a knob, so as to finely adjust the position of the cutter wheel 21 in the X and Y directions by means of the air cylinder 22. It should be noted that the fine adjustment mechanism 23 finely adjusts the position of the cutter wheel 21 such that a cut-line forming point where the cutter wheel 21 comes into contact with the glass plate 2 to form the cut line 3 on the glass plate 2 is located on an axis C1 of the cut-line forming head 4.

The bend-breaking means 5 includes bend-breaking heads 41 and 41a each adapted to bend-break along the cut line 3 the glass plate 2 supported on the bend-breaking supporting table 10, as well as bend-breaking-head moving devices 42 and 42a for respectively moving the bend-breaking heads 41 and 41a in the X direction and the Y direction relative to the glass plate 2.

The bend-breaking heads 41 and 41a are respectively formed similarly, and the bend-breaking head 41 effects the bend-breaking of the glass plate 2 in its half area, while the bend-breaking head 41a effects the bend-breaking of the glass plate 2 in its remaining half area. Accordingly, a detailed description will be given hereafter of the bend-breaking head 41, and with respect to the bend-breaking head 41a a reference character 'a' will be added in the drawings, as required, and a detailed description thereof will be omitted.

As particularly explained in detail in Fig. 11, the bend-breaking head 41 includes an edge-cut-line forming means 44 for forming an edge cut line 43 on the glass plate 2 with the cut line 3 formed thereon, as well as a push-breaking means 45 for push-breaking along the cut line 3 the glass plate 2 with the edge cut line 43 formed thereon.

The edge-cut-line forming means 44 includes an edge-cut-line forming cutter wheel 46, an air cylinder 47 for raising or lowering the cutter wheel 46, and an electric motor 48 for directing the blade of the cutter wheel 46 in the direction of forming an edge cut line. The cutter wheel 46 and an output rotating shaft of the electric motor 48 are connected by means of a pulley, a belt, and the like. The air cylinder 47 has a piston rod 49 which is reciprocatable in the Z direction, and the cutter wheel 46 is attached to the outer distal end of this piston rod 49. The air cylinder 47 and the electric motor 48 are mounted on a movable base 74.

The push-breaking means 45 includes a push rod 51 for press-breaking and an air cylinder 52 for raising or lowering the push rod 51. The air cylinder 52 has a piston rod 53 which is reciprocatable in the Z direction, and the push rod 51 is attached to an outer distal end of this piston rod 53. The air cylinder 52 is mounted on the movable base 74.

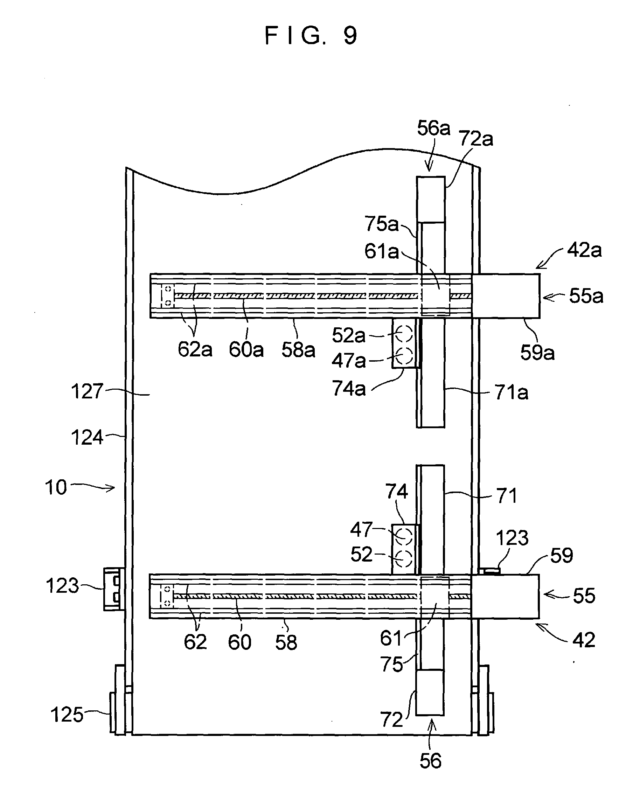

The bend-breaking-head moving devices 42 and 42a are respectively formed similarly. As is apparent from Fig. 9 as well, the bend-breaking-head moving device 42 moves the bend-breaking head 41 relative to the glass plate 2 in its half area, while the bend-breaking-head moving device 42a moves the bend-breaking head 41a relative to the glass plate 2 in its remaining half area. Accordingly, a detailed description will be given hereafter of the bend-breaking-head moving device 42, and with respect to the bend-breaking-head moving device 42a a reference character 'a' will be added in the drawings, as required, and a detailed description thereof will be omitted.

The bend-breaking-head moving device 42 has an X-direction moving device 55 for moving the bend-breaking head 41 in the X direction, as well as a Y-direction moving device 56 for moving the bend-breaking head 41 in the Y direction.

The X-direction moving device 55 includes a frame 58 fixed to an upper frame 57 in such a manner as to extend in the X direction; an electric motor 59 mounted to one end of the frame 58; a threaded shaft 60 supported rotatably by the frame 58 and having one end connected to an output rotating shaft of the electric motor 59 in such a manner as to extend in the X direction; a slider 61 to which a nut threadedly engaged with the threaded shaft 60 is secured; and a pair of guide rails 62 fitted to this slider 61 and attached to the frame 58 in such a manner as to extend in the X direction, so as to be able to guide the slider 61 in the X direction. The slider 61 is mounted on a frame 71. The X-direction moving device 55 is adapted to move the bend-breaking head 41 in the X direction by means of the frame 71 and the like as the operation of the electric motor 59 rotates the threaded shaft 60 connected to the output rotating shaft of the electric motor 59, and this rotation causes the slider 61, to which the nut threadedly engaged with the threaded shaft 60 is secured, to move while being guided by the guide rails 62 in the X direction. It should be noted that the frame 58a is fixed to an upper frame 200.

The Y-direction moving device 56 includes the frame 71 attached to the slider 61 in such a manner as to extend in the Y direction; an electric motor 72 mounted to one end of this frame 71; a threaded shaft 73 supported rotatably by the frame 71 and having one end connected to an output rotating shaft of the electric motor 72 in such a manner as to extend in the Y direction; the movable base 74 to which a nut threadedly engaged with this threaded shaft 73 is secured; and a pair of guide rails 75 fitted to the movable base 74 and attached to the frame 71 in such a manner as to extend in the Y direction, so as to be able to guide the movable base 74 in the Y direction. The air cylinders 47 and 52 and the electric motor 48 are mounted on the movable base 74. Namely, the bend-breaking head 41 is mounted on the movable base 74. The Y-direction moving device 56 is adapted to move the bend-breaking head 41 mounted on the movable base 74 in the Y direction as the operation of the electric motor 72 rotates the threaded shaft 73 connected to the output rotating shaft of the electric motor 72, and this rotation causes the movable base 74, to which the nut threadedly engaged with that threaded shaft 73 is secured, to move while being guided by the guide rails 75 in the Y direction.

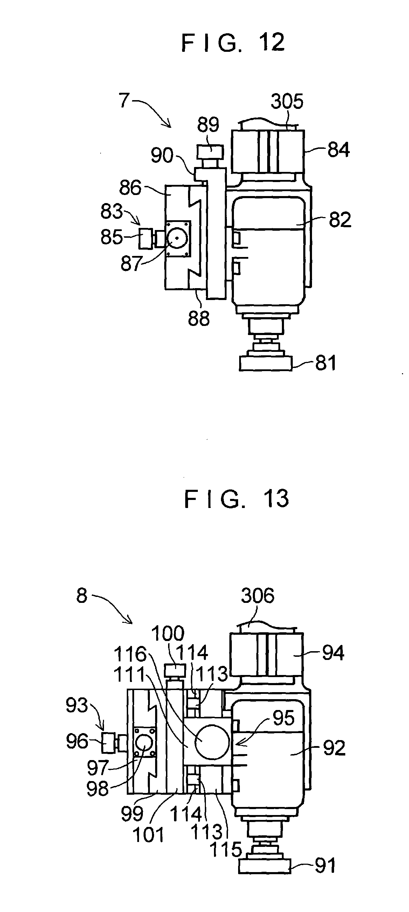

As particularly shown in Fig. 12, the grinding head 7 includes a grinding wheel 81 constituted by a grinding diamond grinding wheel; a spindle motor 82 for rotating the grinding wheel 81; a fine adjustment mechanism 83 for finely adjusting the position of the grinding wheel 81; and a gripper 84 attached to a lower end of a shaft 305. The grinding wheel 81 is attached to an output rotating shaft of the spindle motor 82.

The fine adjustment mechanism 83 includes a threaded shaft 85 attached rotatably to the gripper 84 in such a manner as to extend in the X direction; an X-direction slide 86 to which a nut threadedly engaged with the threaded shaft 85 is secured and which is fitted to the gripper 84 so as to be movable in the X direction; a threaded shaft 87 attached rotatably to the X-direction slide 86 in such a manner as to extend in the Y direction; a Y-direction slide 88 to which a nut threadedly engaged with the threaded shaft 87 is secured and which is fitted to the X-direction slide 86 so as to be movable in the Y direction; a threaded shaft 89 attached rotatably to the Y-direction slide 88 in such a manner as to extend in the Z direction; and a Z-direction slide 90 to which a nut threadedly engaged with the threaded shaft 89 is secured and which is fitted to the Y-direction slide 88 so as to be movable in the Z direction. The spindle motor 82 is fixed to the Z-direction slide 90. The fine adjustment mechanism 83 adjusts the movement of the X-direction slide 86 in the X direction relative to the gripper 84 by rotating the threaded shaft 85 by means of a knob, adjusts the movement of the Y-direction slide 88 in the Y direction relative to the X-direction slide 86 by rotating the threaded shaft 87 by means of a knob, and adjusts the movement of the Z-direction slide 90 in the Z direction relative to the Y-direction slide 88 by rotating the threaded shaft 89 by means of a knob. The fine adjustment mechanism 83 is thereby adapted to finely adjust the position of the grinding wheel 81 in the X, Y, and Z directions by means of the spindle motor 82. It should be noted that the fine adjustment mechanism 83 finely adjusts the position of the grinding wheel 81 such that a grinding point where the grinding wheel 81 comes into contact with the peripheral edge 6 to grind the peripheral edge 6 of the glass plate 2 is located on an axis C2 of the grinding head 7.

As particularly shown in Fig. 13, the mirror polishing head 8 includes a mirror polishing grinding wheel 91; a spindle motor 92 serving as a rotating means for rotating the mirror polishing wheel 91; a fine adjustment mechanism 93 for finely adjusting the position of the mirror polishing wheel 91; a gripper 94 attached to a lower end of a shaft 306; and a resiliently supporting means 95 for supporting the mirror polishing wheel 91 resiliently and movably in a Q direction perpendicular to a tangential direction of the peripheral edge 6 of the glass plate 2 at a mirror polishing point where the mirror polishing wheel 91 comes into contact with the peripheral edge 6 to mirror polish the peripheral edge 6 of the glass plate 2, so as to impart a resiliently pressing force to the peripheral edge 6 of the glass plate 2 by the mirror polishing wheel 91. The mirror polishing wheel 91 is attached to an output rotating shaft of the spindle motor 92.

The fine adjustment mechanism 93 includes a threaded shaft 96 attached rotatably to the gripper 94 in such a manner as to extend in the X direction; an X-direction slide 97 to which a nut threadedly engaged with the threaded shaft 96 is secured and which is fitted to the gripper 94 so as to be movable in the X direction; a threaded shaft 98 attached rotatably to the X-direction slide 97 in such a manner as to extend in the Y direction; a Y-direction slide 99 to which a nut threadedly engaged with the threaded shaft 98 is secured and which is fitted to the X-direction slide 97 so as to be movable in the Y direction; a threaded shaft 100 attached rotatably to the Y-direction slide 99 in such a manner as to extend in the Z direction; and a Z-direction slide 101 to which a nut threadedly engaged with the threaded shaft 100 is secured and which is fitted to the Y-direction slide 99 so as to be movable in the Z direction. The mirror polishing wheel 91 is mounted on the Z-direction slide 101 through the spindle motor 92 and the like. The fine adjustment mechanism 93 adjusts the movement of the X-direction slide 97 in the X direction relative to the gripper 94 by rotating the threaded shaft 96 by means of a knob, adjusts the movement of the Y-direction slide 99 in the Y direction relative to the X-direction slide by rotating the threaded shaft 98 by means of a knob, and adjusts the movement of the Z-direction slide 101 in the Z direction relative to the Y-direction slide 99 by rotating the threaded shaft 100 by means of a knob. The fine adjustment mechanism 93 is thereby adapted to finely adjust the position of the mirror polishing wheel 91 in the X, Y, and Z directions. It should be noted that the fine adjustment mechanism 93 finely adjusts the position of the mirror polishing wheel 91 such that a mirror polishing point where the mirror polishing wheel 91 comes into contact with the peripheral edge 6 to mirror polish the peripheral edge 6 of the glass plate 2 is located on an axis C3 of the mirror polishing head 8.

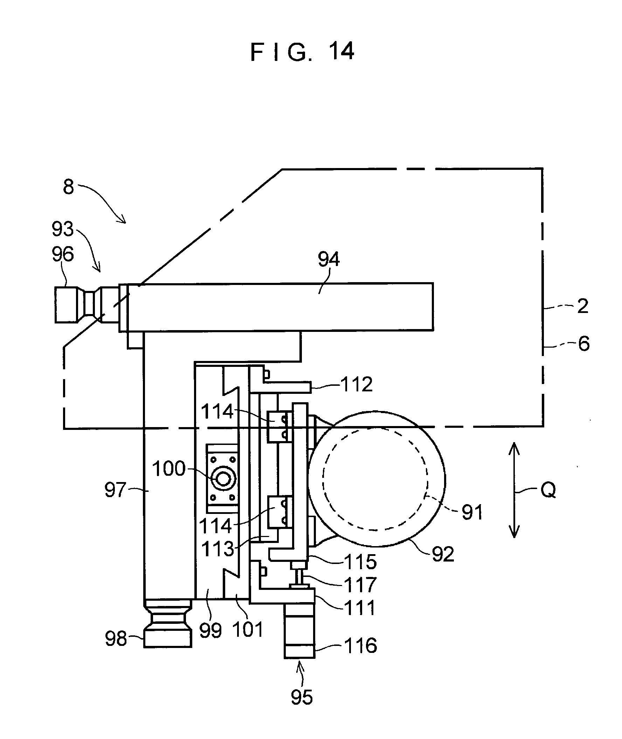

As particularly shown in Fig. 14, the resiliently supporting means 95 includes an attaching member 111 attached to the Z-direction slide 101; a hampering member 112 attached to the Z-direction slide 101; a pair of guide rails 113 attached to the Z-direction slide 101 in such a manner as to extend in the Q direction; a slider 114 fitted to the guide rails 113; a supporting plate 115 to which the slider 114 is secured; a pneumatic cylinder unit 116 constituted by a low-friction diaphragm cylinder or the like attached to the attaching member 111; and an air compression source (not shown) for supplying compressed air to the pneumatic cylinder unit 116. The guide rails 113 are located between the attaching member 111 and the hampering member 112. The pneumatic cylinder unit 116 is located so that the piston rod 117 is forwardly and backwardly movable freely in the Q direction. The piston rod 117 is connected at its outer distal end to the supporting plate 115. The spindle motor 92 is fixed to the supporting plate 115 such that an output rotating shaft of the spindle motor 92 extends in the Z direction. The pneumatic cylinder unit 116 resiliently restricts the movement of the supporting plate 115 between the hampering member 112 and the attaching member 111 in the Q direction by the compressed air supplied from the air compression source. The resiliently supporting means 95 is adapted to support the mirror polishing wheel 91 resiliently and movably in the Q direction by means of the supporting plate 115 and the spindle motor 92 by resiliently supporting the supporting plate 115 between the pneumatic cylinder unit 116 and the hampering member 112. Thus, during the mirror polishing of the peripheral edge 6 of the glass plate 2, the mirror polishing wheel 91 is resiliently supported, i.e., supported in an air-floating manner, with respect to the Q direction by the resiliently supporting means 95 after establishing a balance between the supplied air pressure and the reaction force applied to the mirror polishing wheel 9 from the glass plate 3.

The above-described resiliently supporting means 95 is adapted to position the mirror polishing wheel 91 with respect to the peripheral edge 6 in the Q direction, such that the mirror polishing wheel 91 comes into contact with that portion of the peripheral edge 6 of the glass plate 2 which requires mirror polishing. In addition, the resiliently supporting means 95 is adapted to retract the mirror polishing wheel 91 away from the peripheral edge 6 in the Q direction by the actuation of the pneumatic cylinder unit 116, such that the mirror polishing wheel 91 does not come into contact with that portion of the peripheral edge 6 of the glass plate 2 which does not require mirror polishing.

It should be noted that, in addition to the above-described arrangements, the mirror polishing head 8 in this embodiment may include a rigidly supporting means for rigidly supporting the mirror polishing wheel 91 in the Q direction, and may be adapted to release the resilient support of the mirror polishing wheel 91 by the resiliently supporting means 95 by means of the rigidly supporting means. Here, the rigidly supporting means may, for instance, have a supporting rod held in threaded engagement with the attaching member 111 and extending in the Q direction so as to be positionally adjustable in the Q direction. An arrangement may be provided such that as the supporting rod is rotatively moved to project on the supporting plate 115 side and cause one end of this supporting rod to abut against the supporting plate 115, the movement of the supporting plate 115 in its Q direction is rigidly restricted between the same and the hampering member 112, to thereby rigidly support the mirror polishing wheel 91 in the Q direction.

The cut-line-forming supporting table 9, the bend-breaking supporting table 10, the grinding supporting table 11, the mirror-polishing supporting table 12, a placing table 183, and a placing table 184 are disposed on a base 121 such that upper surfaces of the glass plates 2 supported respectively thereon become flush with each other, and at fixed intervals in the X direction with respect to each other.

The cut-line-forming supporting table 9 has a table 122 mounted on the base 121 by means of a Y-direction moving means 142. The table 122 has an area for supporting the overall lower surface of the glass plate 2. The upper surface of the table 122 for supporting the glass plate 2 is formed flatly, and a sheet (not shown) is secured on its upper surface and is thereby arranged not to cause damage to the glass plate 2.

The bend-breaking supporting table 10 includes a supporting plate 124 mounted on the base 121 by means of columns 123; a drum 125 rotatably installed at one end, as viewed in the Y direction, of the supporting plate 124; a drum 126 rotatably installed at the other end, as viewed in the Y direction, of the supporting plate 124; and a flexible endless belt 127 wound around and trained between the drums 125 and 126. The glass plate 2 is adapted to be placed on the endless belt 127.

It should be noted that the base 121 is provided with a traveling means 128 for causing the endless belt 127 to travel in the Y direction so as to discharge the cullet of the glass plate 2 remaining on the endless belt 127. The traveling means 128 has an electric motor 129 mounted on the base 121, as well as a pulley, a belt, and the like for coupling an output rotating shaft of the electric motor 129 to the drum 126. In addition, a cullet accommodating section 130 for accommodating the cullet discharged from the endless belt 127 by the traveling means 128 is provided at a downstream end of the endless belt 127.

The grinding supporting table 11 and the mirror-polishing supporting table 12 respectively have suction units 131 mounted on the base 121 by means of the Y-direction moving means 142 and adapted to suck the glass plate 2. As a vacuum suction pump is operated, the glass plate 2 placed on the suction unit 131 is adapted to be sucked and held by being sucked from its lower surface through the piping and a valve.

The moving means 13 includes an X-direction moving means 141 for moving the cut-line forming head 4, the grinding head 7, and the mirror polishing head 8 in the X direction relative to the glass plate 2, as well as the Y-direction moving means 142 for moving the cut-line forming head 4, the grinding head 7, and the mirror polishing head 8 in the Y direction relative to the glass plate 2.

The X-direction moving means 141 includes an electric motor 143 mounted on the upper frame 57; a threaded shaft 144 coupled to an output rotating shaft of the electric motor 143 by means of a pulley, a belt, and the like and mounted rotatably on the upper frame 57 in such a manner as to extend in the X direction; a nut 145 threadedly engaged with the threaded shaft 144; a movable base 146 to which this nut 145 is secured; and a pair of guide rails 147 fitted to the movable base 146 and fixed to the upper frame 57 in such a manner as to extend in the X direction. The guide rails 147 are adapted to guide the movable base 146 in the X direction. The cut-line forming head 4 is mounted on the movable base 146 by means of a bearing 301 and the shaft 304; the grinding head 7 is mounted thereon by means of a bearing 302 and the shaft 305; and the mirror polishing head 8 is mounted thereon by means of a bearing 303 and the shaft 306. The X-direction moving means 141 is arranged such that as the electric motor 143 is operated, the threaded shaft 144 is rotated, which rotation moves in the X direction the movable base 146 to which the nut 145 threadedly engaged with the threaded shaft 144 is secured, to thereby allow the cut-line forming head 4, the grinding head 7, and the mirror polishing head 8 which are mounted on the movable base 146, respectively, to be moved in the X direction mechanically in synchronism with each other.

The Y-direction moving means 142 includes threaded shafts 151, 152, and 153 mounted rotatably on the base 121 and extending in the Y direction; a nut 154 threadedly engaged with the threaded shaft 151 and secured to the cut-line-forming supporting table 9; a nut 155 threadedly engaged with the threaded shaft 152 and secured to the grinding supporting table 11; a nut 156 threadedly engaged with the threaded shaft 153 and secured to the mirror-polishing supporting table 12; a line shaft 158 coupled to one ends of the threaded shafts 151, 152, and 153, respectively, by means of gear mechanisms 157 and mounted rotatably on the base 121; an electric motor 159 coupled to one end of the line shaft 158; a slider 160 fixed to the cut-line-forming supporting table 9; a pair of guide rails 161 fitted to the slider 160 and fixed to the base 121 in such a manner as to extend in the Y direction; a slider 162 fixed to the grinding supporting table 11; a pair of guide rails 163 fitted to the slider 162 and fixed to the base 121 in such a manner as to extend in the Y direction; a slider 164 fixed to the mirror-polishing supporting table 12; and a pair of guide rails 165 fitted to the slider 164 and fixed to the base 121 in such a manner as to extend in the Y direction. The Y-direction moving means 142 is arranged such that as the electric motor 159 is operated, the line shaft 158 is rotated, which rotation rotates the threaded shafts 151, 152, and 153, respectively, by means of the respective gear mechanisms 157. Thus, the Y-direction moving means 142 causes the cut-line-forming supporting table 9, the grinding supporting table 11, and the mirror-polishing supporting table 12, to which the nuts 154, 155, and 156 respectively engaged threadedly with the threaded shafts 151, 152, and 153 are secured, to move in the Y direction in mechanical synchronism with each other.

The swiveling means 14 includes the bearings 301, 302, and 303 installed on the movable base 146; the shafts 304, 305, and 306 respectively held rotatably by the bearings 301, 302, and 303 and extending in the Z direction; bevel gears 167 installed at respective upper ends of the shafts 304, 305, and 306; bevel gears 168 threadedly engaged with the bevel gears 167, respectively; a line shaft 169 to which respective bevel gears 168 is secured and supported rotatably on the movable base 146 and extending in the X direction; a gear 170 secured to the line shaft 169; a gear 171 threadedly engaged with the gear 170; and an electric motor 172 mounted on the movable base 146 and having an output rotating shaft to which the gear 171 is fixed. The gripper 24 is attached to a lower end of the shaft 304, the gripper 84 is attached to a lower end of the shaft 305, and the gripper 94 is attached to a lower end of the shaft 306. The swiveling means 14 is arranged such that as the electric motor 172 is operated, the line shaft 169 is rotated by means of the gears 170 and 171, which rotation rotates the shafts 304, 305, and 306 in synchronism with each other by means of the bevel gears 167 and 168. Thus, the swiveling means 14 causes the cut-line forming head 4 attached suspendedly to the lower end of the shaft 304, the grinding head 7 attached suspendedly to the lower end of the shaft 305, and the mirror polishing head 8 attached suspendedly to the lower end of the shaft 306 to swivel in the R direction in synchronism with each other.

The above-described swiveling means 14 is adapted to swivel the cut-line forming head 4 in the R direction about the axis C 1 extending in the Z direction and passing through the cut-line forming point, swivel the grinding head 7 in the R direction about the axis C2 extending in the Z direction and passing through the grinding point, and swivel the mirror polishing head 8 in the R direction about the axis C3 extending in the Z direction and passing through the mirror polishing point.

The transporting means 15 includes a lifting means 181 for lifting up the glass plate 2; a glass-plate moving device 182 for moving in the X direction the glass plate 2 lifted up by the lifting means 181; the placing table 183 disposed on a glass-plate carrying-in end side and adapted to place thereon the glass plate 2 subject to working; and the placing table 184 disposed on a glass-plate carrying-out end side and adapted to place the worked glass plate 2 thereon.

The lifting means 181 has a suction unit 185 for sucking the glass plate 2 and a lifting device 186 for raising or lowering the suction unit 185.

The suction unit 185 has five suction cups 191 and vacuum suction pumps (not shown) respectively connected to the suction cups 191 through the piping and valves. As the vacuum suction pumps are actuated, the upper surfaces of the glass plates 2 are respectively sucked by the suction cups 191 so as to hold the glass plates 2. It should be noted that the suction cups 191 are arranged such that intervals at which they adjoin each other in the X direction become substantially equal.

The lifting device 186 has five air cylinders 195, and the suction cups 191 are respectively attached to outer distal ends of piston rods 196 of the air cylinders 195, the piston rods 196 extending in the Z direction. The air cylinders 195 are mounted on a movable base 205 by means of brackets 197. The lifting device 186 is arranged such that as the air pressure of the air cylinders 195 is increased or decreased, the piston rods 196 are reciprocated in the Z direction, so that the suction cups 191 attached to the piston rods 196 are raised or lowered by this reciprocating motion.

The glass-plate moving device 182 includes an electric motor 201 mounted on an upper frame 200 juxtaposed to the upper frame 57; a threaded shaft 202 supported rotatably on the upper frame 200 and coupled to an output rotating shaft of the electric motor 201 by means of a pulley, a belt, and the like in such a manner as to extend in the X direction; a nut 203 threadedly engaged with the threaded shaft 202; a pair of guide rails 204 fixed to the upper frame 200 and extending in the X direction; and the movable base 205 to which the nut 203 is secured and fitted to the guide rails 204 in such a manner as to be movable in the X direction. The arrangement provided may be such that as the output rotating shaft of the electric motor 201 is rotated, the threaded shaft 202 is rotated by means of the pulley, the belt, and the like, and the rotation of this threaded shaft 202 moves the movable base 205 in the X direction by means of the nut 203. This movement allows the movable base 205 to move in the X direction the glass plate 2 sucked by the suction unit 185 by means of the bracket 206 and the like.

The placing table 183 includes an electric motor 211 supported on the base 121; a drive-side drum 213 and a driven-side drum 214 which are rotatably supported on the base 121 by means of a frame 212; a plurality of endless belts 215 trained between the drums 213 and 214; and a positioning roller (not shown) for positioning the glass plate 2. An output rotating shaft of the electric motor 211 is coupled to the drum 213 by means of a pulley, a belt, and the like. The placing table 183 is arranged such that as the electric motor 211 is operated, the drum 213 is rotated by means of the pulley, the belt, and the like to cause the plurality of endless belts 215 trained between the drums 213 and 214 to travel in the X direction.

The placing table 184 includes an electric motor 221 supported on the base 121; a drive-side drum 223 and a driven-side drum 224 which are rotatably supported on the base 121 by means of a frame 222; and a plurality of endless belts 225 trained between the drums 223 and 224. An output rotating shaft of the electric motor 221 is coupled to the drum 223 by means of a pulley, a belt, and the like. The placing table 184 is arranged such that as the electric motor 221 is operated, the drum 223 is rotated by means of the pulley, the belt, and the like to cause the plurality of endless belts 225 trained between the drums 223 and 224 to travel in the X direction.

In a case where the glass plate 2 for use as the window glass for an automobile is worked by the glass-plate working apparatus 1 of this embodiment, the glass plate 2 on the placing table 183 is first sucked by the suction unit 185, and the sucked glass plate 2 is raised by the lifting device 186. The raised glass plate 2 is moved in the X direction by the glass-plate moving device 182 and is positioned above the cut-line-forming supporting table 9. That glass plate 2 is lowered by the lifting device 186 and is placed on the cut-line-forming supporting table 9, and the suction of the glass plate 2 by the suction unit 185 is released.

Next, the cutter wheel 21 is lowered by the air cylinder 22 to apply cutting pressure to the glass plate 2 placed on the cut-line-forming supporting table 9. The cut line 3 is formed on the glass plate 2 by moving the cut-line forming head 4 in the X direction by the X-direction moving means 141 and the cut-line-forming supporting table 9 in the Y direction by the Y-direction moving means 142, while swiveling the cut-line forming head 4 in the R direction about the axis C 1 by the swiveling means 14, such that the edge of the cutter wheel 21 is always maintained in the cut-line forming direction.

Next, the glass plate 2 which is placed on the cut-line-forming supporting table 9 and on which the cut line 3 has been formed is sucked by the suction unit 185, and the sucked glass plate 2 is raised by the lifting device 186. The raised glass plate 2 is moved in the X direction by the glass-plate moving device 182 to be positioned above the bend-breaking supporting table 10. That glass plate 2 is lowered by the lifting device 186 and is placed on the bend-breaking supporting table 10, and the suction of the glass plate 2 by the suction unit 185 is released.

Next, the cutter wheel 46 is lowered by the air cylinder 47 to apply cutting pressure to the glass plate 2 placed on the endless belt 127. The cutter wheel 46 is moved in the X direction and the Y direction by the X-direction moving device 55 and the Y-direction moving device 56, while the cutter wheel 46 is being swiveled by the operation of the electric motor 48 by means of the belt, the pulley, or the like, such that the edge of the cutter wheel 46 is always maintained in the edge-cut-line forming direction. The edge cut line 43 is thereby formed on a portion of the glass plate 2 on the outer side of the cut line 3. Further, to press-break the glass plate 2 on which the edge cut line 43 has been formed, the push rod 51 is moved by the X-direction moving device 55 and the Y-direction moving device 56, and the push rod 51 is lowered by the air cylinder 52. The glass plate 2 is thereby pressed, and the glass plate 2 is press-broken along its cut line 3. It should be noted that concurrently with the bend-breaking in the half area of the glass plate 2, bend-breaking is also effected in the remaining half area of the glass plate 2 in the above-described manner.

Next, the bend-broken glass plate 2 on the bend-breaking supporting table 10 is sucked by the suction unit 185, and the sucked glass plate 2 is raised by the lifting device 186. The raised glass plate 2 is moved in the X direction by the glass-plate moving device 182 to allow the glass plate 2 to be positioned above the grinding supporting table 11. The glass plate 2 is lowered by the lifting device 186 and is placed on the grinding supporting table 11, and the suction of the glass plate 2 by the suction unit 185 is released.

It should be noted that after the glass plate 2 has been carried out from the endless belt 127, the endless belt 127 trained between the drums 125 and 126 is caused to travel in the Y direction by the operation of the electric motor 129 to discharge the cullet of the glass plate 2 on the endless belt 127 from the endless belt 127. The discharged cullet is accommodated in the cullet accommodating section 130 provided at the downstream end of the endless belt.

Next, the lower surface of the glass plate 2 placed on the grinding supporting table 11 is sucked by the suction unit 131. The peripheral edge 6 of the glass plate 2 is ground by moving the grinding head 7 in the X direction by the X-direction moving means 141 and the grinding supporting table 11 in the Y direction by the Y-direction moving means 142, while swiveling the grinding head 7 about the axis C2 by the swiveling means 14, such that the grinding wheel 81 is always maintained at a fixed angle with respect to the peripheral edge 6 of the sucked glass plate 2. It should be noted that the grinding wheel 81 is rotated by the operation of the spindle motor 82.

Next, the glass plate 2 which is placed on the grinding supporting table 11 and whose peripheral edge 6 has been ground is sucked by the suction unit 185, and the sucked glass plate 2 is raised by the lifting device 186. The raised glass plate 2 is moved in the X direction by the glass-plate moving device 182 to be positioned above the mirror-polishing supporting table 12. The glass plate 2 is lowered by the lifting device 186 and is placed on the mirror-polishing supporting table 12, and the suction of the glass plate 2 by the suction unit 185 is released.

Next, the lower surface of the glass plate 2 placed on the mirror-polishing supporting table 11 is sucked by the suction unit 131. The peripheral edge 6 of the glass plate 2 is mirror polished by moving the mirror polishing head 8 in the X direction by the X-direction moving means 141 and the mirror-polishing supporting table 12 in the Y direction by the Y-direction moving means 142, while swiveling the mirror polishing head 8 about the axis C3 by the swiveling means 14, such that the mirror polishing wheel 91 is always maintained at a fixed angle with respect to the peripheral edge 6 of the sucked glass plate 2. Here, the resiliently supporting means 95 positions the mirror polishing wheel 91 with respect to the peripheral edge 6 in the Q direction, such that the mirror polishing wheel 91 is brought into contact with that portion of the peripheral edge 6 of the glass plate 2 which requires mirror polishing. The resiliently supporting means 95 resiliently supports the mirror polishing wheel 91 in that positioned state. In addition, the resiliently supporting means 95 retracts the mirror polishing wheel 91 away from the peripheral edge 6 in the Q direction, such that the mirror polishing wheel 91 does not come into contact with that portion of the peripheral edge 6 of the glass plate 2 which does not require mirror polishing. It should be noted that the mirror polishing wheel 91 is rotated by the operation of the spindle motor 92.

Next, the glass plate 2 which is placed on the mirror-polishing supporting table 12 and whose peripheral edge 6 has been mirror polished is sucked by the suction unit 185, and the sucked glass plate 2 is raised by the lifting device 186. The raised glass plate 2 is moved in the X direction by the glass-plate moving device 182 to be positioned above the placing table 184. The glass plate 2 is lowered by the lifting device 186 and is placed on the placing table 184, and the suction of the glass plate 2 by the suction unit 185 is released.

Finally, the plurality of endless belts 225 are caused to travel in the X direction by the operation of the electric motor 221 so as to carry out the worked glass plate 2 placed on the plurality of endless belts 225 from the glass-plate working apparatus 1.

Since the cut-line forming head 4, the grinding head 7, and the mirror polishing head 8 are respectively moved and swiveled synchronously by the moving means 13 and the swiveling means 14, the above-described glass-plate working apparatus 1 effects the formation of the cut line on the glass plate 2 on the cut-line-forming supporting table 9 by the cut-line forming head 4, the grinding of the peripheral edge 6 of the glass plate 2 on the grinding supporting table 11, and the mirror polishing of the peripheral edge 6 of the glass plate 2 on the mirror-polishing supporting table 12, respectively, in synchronism with each other. At the same time, the glass-plate working apparatus 1 effects the bend-breaking of the glass plate 2 on the bend-breaking supporting table 10 concurrently with the cut-line formation, grinding, and mirror polishing.

It should be noted that, in addition to the above-described arrangements, the grinding head 4 of the glass-plate working apparatus 1 of this embodiment may include a resiliently supporting means for resiliently supporting the grinding wheel 81 in the Q direction to impart a resiliently pressing force to the peripheral edge 6 of the glass plate 2 by the grinding wheel 81, as well as a rigidly supporting means for rigidly supporting the grinding wheel 81 in the Q direction to impart a rigidly pressing force to the peripheral edge 6 of the glass plate 2 by the grinding wheel 81. Here, the resiliently supporting means may be formed in the same way as the resiliently supporting means 95 of the mirror polishing head 8. Meanwhile, the rigidly supporting means may have a supporting rod held in threaded engagement with the attaching member of the aforementioned resiliently supporting means and extending in the Q direction so as to be positionally adjustable in the Q direction. An arrangement may be provided such that as that supporting rod is moved by being rotated to project on a supporting plate side of the aforementioned resiliently supporting means and cause one end of this supporting rod to abut against that supporting plate, the movement of the supporting plate in its Q direction is rigidly restricted between the same and the hampering member of the aforementioned resiliently supporting means, to thereby rigidly support the grinding wheel in the Q direction.

## Claims

1. A glass-plate working apparatus comprising:
a cut-line forming head for forming a cut line on a glass plate;
bend-breaking means for bend-breaking along the cut line the glass plate with the cut line formed thereon by said cut-line forming head;
a grinding head for grinding a peripheral edge of the glass plate bend-broken by said bend-breaking means;
a mirror polishing head for mirror polishing the peripheral edge of the glass plate ground by said grinding head so that the peripheral edge assumes a state of a mirror surface;
a cut-line-forming supporting table for supporting the glass plate on which the cut line is to be formed by said cut-line forming head;
a bend-breaking supporting table for supporting the glass plate to be bend-broken by said bend-breaking means;
a grinding supporting table for supporting the glass plate whose peripheral edge is to be ground by said grinding head;
a mirror-polishing supporting table for supporting the glass plate whose peripheral edge is to be mirror polished by said mirror polishing head;
moving means for moving said mirror polishing head, said cut-line forming head, and said grinding head relative to the glass plate; and
transporting means for transporting the glass plate onto said cut-line-forming supporting table, said bend-breaking supporting table, said grinding supporting table, and said mirror-polishing supporting table.

2. The glass-plate working apparatus according to claim 1, wherein said moving means is adapted to move said mirror polishing head and at least one head of said cut-line forming head and said grinding head, respectively, relative to respective glass plates in one direction and another direction cross to the one direction in synchronism with each other.

3. The glass-plate working apparatus according to claim 2, wherein said moving means includes a movable base on which said mirror polishing head and said at least one of said cut-line forming head and said grinding head are mounted, said moving means being so adapted that as said movable base is moved in the one direction, said mirror polishing head and said at least one of said cut-line forming head and said grinding head are respectively moved in the one direction in mechanical synchronism with each other.

4. The glass-plate working apparatus according to claim 2 or 3, wherein said moving means includes a line shaft coupled to said mirror-polishing supporting table and at least one supporting table of said cut-line-forming supporting table and said grinding supporting table by means of a threaded shaft threadedly engaged with said respective supporting tables and extending in the other direction, said moving means being arranged such that as said line shaft is rotated, said mirror polishing head and said at least one head of said cut-line forming head and said grinding head are respectively moved in the other direction in mechanical synchronism with each other relative to the glass plates respectively supported on said mirror-polishing supporting table and said at least one supporting table of said cut-line-forming supporting table and said grinding supporting table.

5. The glass-plate working apparatus according to any one of claims 1 to 4, wherein said mirror polishing head includes a mirror polishing wheel; rotating means for rotating said mirror polishing wheel; and resiliently supporting means for supporting said mirror polishing wheel resiliently and movably in a direction perpendicular to a tangential direction of the peripheral edge of the glass plate at a mirror polishing point where said mirror polishing wheel comes into contact with the peripheral edge to mirror polish the peripheral edge of the glass plate, so as to impart a resiliently pressing force to the peripheral edge of the glass plate by said mirror polishing wheel.

6. The glass-plate working apparatus according to claim 5, wherein said resiliently supporting means is adapted to support said mirror polishing wheel resiliently and movably onto the peripheral edge of the glass plate in the direction perpendicular to the tangential direction of the peripheral edge of the glass plate, such that said mirror polishing wheel comes into contact with that portion of the peripheral edge of the glass plate which requires mirror polishing, while said resiliently supporting means is adapted to retract said mirror polishing wheel away from the peripheral edge of the glass plate in the direction perpendicular to the tangential direction of the peripheral edge of the glass plate, such that said mirror polishing wheel does not come into contact with that portion of the peripheral edge of the glass plate which does not require mirror polishing.

7. The glass-plate working apparatus according to claim 5 or 6, wherein said resiliently supporting means has a pneumatic cylinder unit for supporting said mirror polishing wheel resiliently and movably in the direction perpendicular to the tangential direction.

8. The glass-plate working apparatus according to any one of claims 1 to 7, further comprising: swiveling means for swiveling said mirror polishing head and said at least one head of said cut-line forming head and said grinding head, respectively, in synchronism with each other.

9. The glass-plate working apparatus according to claim 8, wherein said swiveling means is adapted to swivel said cut-line forming head about an axis on which a cut-line forming point where a cut-line forming cutter wheel of said cut-line forming head comes into contact with the glass plate to form the cut line on the glass plate is located and which extends in a direction perpendicular to one surface of the glass plate, said swiveling means being adapted to swivel said grinding head about an axis which passes through a grinding point where a grinding wheel of said grinding head comes into contact with the peripheral edge of the glass plate to grind the peripheral edge and which extends in the direction perpendicular to the one surface of the glass plate, said swiveling means being adapted to swivel said mirror polishing head about an axis which passes through a mirror polishing point where a mirror polishing wheel of said mirror polishing head comes into contact with the peripheral edge of the glass plate to mirror polish the peripheral edge and which extends in the direction perpendicular to the one surface of the glass plate.

10. The glass-plate working apparatus according to any one of claims 1 to 9, wherein said bend-breaking means includes a bend-breaking head for bend-breaking along the cut line the glass plate supported on said bend-breaking supporting table and a bend-breaking-head moving device for moving said bend-breaking head in the one direction and the other direction relative to the glass plate, and said bend-breaking head includes edge-cut-line forming means for forming an edge cut line on the glass plate with the cut line formed thereon by said cut-line forming head and push-breaking means for push-breaking along the cut line the glass plate with the edge cut line formed thereon by said edge-cut-line forming means.
